(19) Europäisches Patentamt
European Patent Office
Office européen des brevets

(11) EP 4 729 557 A1

(12) **EUROPEAN PATENT APPLICATION**

(43) Date of publication:
**22.04.2026 Bulletin 2026/17**

(21) Application number: **24207187.6**

(22) Date of filing: **17.10.2024**

(51) International Patent Classification (IPC):
***C08G 63/47*** *(2006.01)* ***C08G 63/78*** *(2006.01)*
***C08G 63/20*** *(2006.01)* ***C09D 4/06*** *(2006.01)*

(52) Cooperative Patent Classification (CPC):
(C-Sets available)
**C09D 4/06; C08G 63/20; C08G 63/47; C08G 63/78**
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **hubergroup Deutschland GmbH**
  **85551 Kirchheim (DE)**
- **Fraunhofer-Gesellschaft zur Förderung der angewandten Forschung e.V.**
  **80686 München (DE)**

(72) Inventors:
- **ROBERT, Tobias**
  **38104 Braunschweig (DE)**
- **CHRIST, Henrik-Alexander**
  **38126 Braunschweig (DE)**
- **BACK, Justus**
  **81829 München (DE)**

(74) Representative: **Henkel & Partner mbB**
**Patentanwaltskanzlei, Rechtsanwaltskanzlei**
**Maximiliansplatz 21**
**80333 München (DE)**

(54) **A POLYESTERACRYLATE BEING SUITABLE AS A RESIN OF A RADIATION CURING COATING**

(57) The present invention relates to a polyesteracrylate composition being obtainable by a method comprising the steps of:
a) reacting $a_1$) at least one carboxylic acid comprising two or more carboxylic groups and/or at least one cyclic polycarboxylic acid anhydride with $a_2$) at least one polyhydric alcohol comprising 4 to 7 hydroxy groups so as to obtain a first reaction mixture comprising a first reaction product and
b) reacting $b_1$) the first reaction mixture with $b_2$) at least one polyol comprising 2 to 5 hydroxy groups and (meth) acrylic acid or with $b_3$) at least one hydroxyfunctional (meth)acrylate so as to obtain a second reaction mixture comprising a polyesteracrylate.

EP 4 729 557 A1

(52) Cooperative Patent Classification (CPC): (Cont.)

C-Sets
**C09D 4/06, C08F 290/061**

## Description

The present invention relates to a polyesteracrylate composition being suitable as resin for radiation curing or thermally curing coatings, such as a radiation curing or a thermally curing ink. Furthermore, the present invention relates to a method for producing a polyesteracrylate composition and to a coating containing the same.

Coatings, i.e. coverings being applied to the surface of an object, are widely used for different purposes, such as for protecting the surface for instance against corrosion, wear and/or humidity, for decorating the surface, for functionalizing the surface for instance by providing electrical conductivity and/or a magnetic response, for providing information such as in the case of newspapers (i.e. printed paper) or printed cardboards or the like. Examples of such coatings are inks, varnishes, wall coatings, floor coatings, industrial coatings, and the like. Such coatings may be applied onto the substrate as liquid, gas or solid and are then typically dried, hardened or cured, respectively, either by physical drying upon water or solvent evaporation, or by a chemical reaction, such as cross-linking or the like. Depending on the curing mechanism, these coatings are subdivided into temperature curing coatings, humidity curing coatings, oxidatively curing coatings, radiation curing coatings including UV curing coatings and the like. A particularly important class of such coatings are radiation curing coatings, which cure upon exposure to radiation, and thermally curing coatings, which cure upon the exposure to a specific temperature. The type of initiator being chosen in a thermally curing coating determines the initiation temperature of the curing.

Such coatings contain as an essential component a resin typically in an amount of 10 to 70% in addition to one or more other components being selected from co-resins, reactive diluents, fillers, pigments, additives, photoinitiators, co-initiators, solvents and the like. In the case of radiation curing and/or thermally curing coatings, the resin is usually a polymer with a molecular weight ranging between 500 and 20,000 g/mol containing acrylate groups, such as in particular a polyesteracrylate. In the case of a radiation curing coating, the resin is contained in the coating - depending on the radiation source - mostly together with a photoinitiator or photoinitiator combinations. Upon irradiation, such as UV irradiation, the photoinitiator decomposes and generates start molecules for a radical or cationic polymerization reaction of ethylenical double bonds, such as the double bond of the acrylic group of the polyesteracrylate leading to a cross-linking and/or intermolecular reaction of polyesteracrylate molecules and hence leading to the curing of the coating. Initiators for a radical polymerization or a cationic polymerization can either be used. The coating can also be cured using the radiation of an excimer lamp or an electron beam source. In this case, initiator molecules are not required for a chemical crosslinking of ethylenic double bonds. In the case of a thermally curing coating, initiator molecules as well as initiator combinations are used, wherein the initiator molecules decompose above a certain temperature and form radicals, which trigger a radical polymerization of ethylenic groups.

Usually, such polyesteracrylates are the esterification product of petrochemical starting materials, such as 1,1,1-trimethylolpropane (TMP), neopentylglycole (NPG), adipic acid and acrylic acid. However, the coating industry meanwhile demands for resins which incorporate building blocks that are derived from biomass or recycled feedstocks on account of environmental and sustainability reasons.

In view of this, the object underlying the present invention is to provide a polyesteracrylate composition being particularly suitable as resin of a radiation curing coating, such as in particular for a radiation curing printing ink composition or a radiation curing varnish composition, which is produced from as much as possible bio-based raw materials.

In accordance with the present invention this object is satisfied by providing a polyesteracrylate composition being obtainable by a method comprising the steps of:

a) reacting $a_1$) at least one carboxylic acid comprising two or more carboxylic groups and/or at least one cyclic polycarboxylic acid anhydride with $a_2$) at least one polyhydric alcohol comprising 4 to 7 hydroxy groups so as to obtain a first reaction mixture comprising a first reaction product and

b) reacting $b_1$) the first reaction mixture with $b_2$) at least one polyol comprising 2 to 5 hydroxy groups and (meth)acrylic acid or with $b_3$) at least one hydroxyfunctional (meth)acrylate so as to obtain a second reaction mixture comprising a polyesteracrylate.

This solution bases on the surprising finding that the above described polyesteracrylate composition is not only synthesizable by using up to 75% of bio-based raw materials, such as (poly)carboxylic acid(s), cyclic polycarboxylic acid anhydride(s) and polyhydric alcohol(s), such as in particular sugar alcohol(s), but also has all the properties required for a resin of a radiation curing or thermally curing coating, such as of an ink or varnish. Polyfunctional carboxylic acids, cyclic polycarboxylic acid anhydrides and sugar alcohols are easily obtainable from biomass. $C_3$- and $C_4$-dicarboxylic acids, such as malonic acid and succinic acid, are produced in large scale from glucose employing a fermentation process, whereas sugar alcohols, such as sorbitol and derivatives, are obtained by reducing glucose or fructose, wherein a typical feedstock for the glucose is starch from potato or corn plants. In particular, the high functionality of sugar alcohols allows to synthesize polyesteracrylates with particularly high acrylate functionalities. Typically the polycondensation reaction being performed to yield polyesteracrylates is catalyzed by strong Broensted acids, such as para-toluene sulfonic acid or methyl

sulfonic acid. The aforementioned advantages were all the more surprising, since polyhydric alcohols, such as in particular sugar alcohols, tend to undergo a cyclisation reaction in the presence of strong acids, which would hinder them to react with a polyester-acrylate with a higher functionality..

A polymer means in accordance with the present invention a substance being composed of molecules being a sequence of one or more types of monomer units. Such molecules are characterized by a molecular weight distribution, wherein differences in the molecular weight are primarily attributable to differences in the number of monomer units in the molecules. Furthermore, a monomer unit is defined in accordance with the present invention as a substance which may be converted via a polymerization reaction into a repeating unit of the polymer sequence. In accordance with the REACH (Registration, Evaluation, Authorisation and Restriction of Chemicals) definition (Regulation (EC) No 1907/2006) of the European Chemical Agency (ECHA), a polymer is preferably defined as a substance meeting the following criteria:

a) More than 50% of the weight of the substance consists of polymer molecules with a minimum of three monomer units which are covalently bound to at least one other monomer unit or other reactants.

b) The amount of polymer molecules presenting the same molecular weight is less than 50% by weight of the substance.

Furthermore, polyol means in accordance with the present invention any compound, which contains two or more hydroxyl groups, whereas "(meth)acrylic acid" is used as abbreviation for "acrylic acid and/or methacrylic acid".

In accordance with the present invention, the polyesteracrylate composition is obtainable by the aforementioned method comprising a first step a) of reacting $a_1$) at least one carboxylic acid comprising two or more carboxylic groups and/or at least one cyclic polycarboxylic acid anhydride with $a_2$) at least one polyhydric alcohol comprising 4 to 7 hydroxy groups so as to obtain a first reaction mixture comprising a first reaction product. In accordance with a particular preferred embodiment of the present invention, the at least one polyhydric alcohol is at least one sugar alcohol comprising 4 to 7 hydroxy groups.

In accordance with a first particularly preferred embodiment of the present invention, the polyesteracrylate composition is obtainable by the aforementioned method comprising as first step a) the reaction of $a_1$) at least one carboxylic acid comprising two or more carboxylic groups with $a_2$) at least one polyhydric alcohol comprising 4 to 7 hydroxy groups and preferably at least one sugar alcohol comprising 4 to 7 hydroxy groups so as to obtain a first reaction mixture comprising a first reaction product, i.e. a first step which does not make any use of one or more cyclic polycarboxylic acid anhydrides. The advantage of this embodiment is that carboxylic acid comprising two or more carboxylic groups, such as dicarboxylic acids, are easily available from biomass, such as plants, or from chemical recycling in a high quality and in large quantities.

Good results are in particular obtained, when the at least one carboxylic acid $a_1$) comprises two to five carboxylic groups, more preferably two to four carboxylic groups, still more preferably two or three carboxylic groups and yet more preferably two carboxylic groups.

Particular good results are in particular obtained, when the at least one carboxylic acid $a_1$) is a dicarboxylic acid having the general formula (I):

$$HOOC\text{-}R^1\text{-}COOH \qquad (I),$$

wherein $R^1$ is absent, a substituted or unsubstituted alkyl group, a substituted or unsubstituted alkenyl group, a substituted or unsubstituted alkynyl group or an aromatic group and preferably a $C_{1-12}$-alkyl group, a $C_{1-12}$-alkenyl group, a $C_{1-12}$-alkynyl group or a phenyl group.

In a further development of the idea of the present invention, it is suggested that the at least one carboxylic acid $a_1$) is selected from the group consisting of oxalic acid, malonic acid, succinic acid, fumaric acid, maleic acid, itaconic acid, glutaric acid, adipic acid, phthalic acid, iso-phthalic acid, terephthalic acid, pimelic acid, suberic acid, azelaic acid, sebacic acid, decandioic acid, dodecandioic acid, dimer acid, citric acid, and arbitrary combinations of two or more thereof. Even more preferably, the at least one carboxylic acid $a_1$) is succinic acid and/or phthalic acid and most preferably the least one carboxylic acid $a_1$) is succinic acid or phthalic acid.

In accordance with an alternative, second particularly preferred embodiment of the present invention, the polyesteracrylate composition is obtainable by the aforementioned method comprising as first step a) the reaction of $a_1$) of at least one cyclic polycarboxylic acid anhydride with $a_2$) at least one polyhydric alcohol comprising 4 to 7 hydroxy groups and preferably at least one sugar alcohol comprising 4 to 7 hydroxy groups, i.e. a first step which does not make any use of one or more carboxylic acids comprising two or more carboxylic groups. Good results are in particular obtained, when the at least one cyclic polycarboxylic acid anhydride $a_1$) is a carboxylic acid anhydride having the general formula (II):

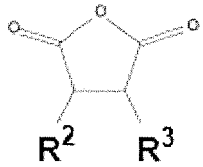

(II),

wherein $R^2$ and $R^3$ are independently from each other hydrogen, an aliphatic group, a cycloaliphatic group or an aromatic group, wherein $R^2$ and $R^3$ may form together a five- or six-membered aromatic or cycloaliphatic ring, each of which can be further substituted by e.g. hydroxy or carboxylic groups, carboxylic acid anhydride groups or combinations thereof. Aliphatic group means in this connection any alkyl group, any alkenyl group or any alkynyl group. Good results are in particular obtained, when $R^2$ and $R^3$ are independently from each other hydrogen, a $C_{1}$-$_{12}$-aliphatic group, a $C_{4-12}$-cycloaliphatic group or a $C_{6-12}$-aromatic group, wherein $R^2$ and $R^3$ may form together a five- or six-membered aromatic or cycloaliphatic ring. Even more preferably, $R^2$ and $R^3$ are independently from each other hydrogen, a $C_{1-6}$-aliphatic group, a $C_{3-4}$-cycloaliphatic group or a $C_{6-8}$-aromatic group, such as a $C_{1-6}$-alkyl group, $C_{1-6}$-alkene group, a $C_{1-6}$-alkyne group, a cyclohexyl group, a phenyl group, a toluyl or a xylyl group.

In a further development of the idea of the present invention, it is proposed that the at least one cyclic polycarboxylic acid anhydride $a_1$) is selected from the group consisting of succinic anhydride, maleic anhydride, itaconic anhydride, adipic anhydride, phthalic anhydride, pyromellitic anhydride, tetrahydrophthalic anhydride, glutaric anhydride, ethylenetetracarboxylic dianhydride and arbitrary combinations of two or more thereof. More preferably, the at least one cyclic polycarboxylic acid anhydride $a_1$) is succinic anhydride.

In accordance with still an alternative, third particularly preferred embodiment of the present invention, the polyesteracrylate composition is obtainable by the aforementioned method comprising as first step a) the reaction of $a_1$) at least one carboxylic acid comprising two or more carboxylic groups and of at least one cyclic polycarboxylic acid anhydride with $a_2$) at least one polyhydric alcohol comprising 4 to 7 hydroxy groups and preferably at least one sugar alcohol comprising 4 to 7 hydroxy groups. The preferred carboxylic acids and preferred cyclic polycarboxylic acid anhydrides are the same as set out above with regard to the previous two preferred embodiments.

In accordance with the present invention, the polyesteracrylate composition is obtainable by the aforementioned method comprising a first step a) of reacting one or more compounds $a_1$) with $a_2$) at least one polyhydric alcohol comprising 4 to 7 hydroxy groups and preferably at least one sugar alcohol comprising 4 to 7 hydroxy groups. Good results are in particular obtained, when at least one sugar alcohol is used as component $a_2$), wherein more preferably the at least one sugar alcohol $a_2$) comprising 4 to 7 hydroxy groups used in step a) has the general formula (III):

$$HO\text{-}CH_2\text{-}[CH(OH)]_n\text{-}CH_2\text{-}HO \qquad (III),$$

wherein n is an integer of 2 to 5, more preferably of 3 or 4 and most preferably of 4.

Good results are in particular obtained, when the at least one sugar alcohol $a_2$) comprising 4 to 7 hydroxy groups used in step a) is selected from the group consisting of erythritol, threitol, arabitol, xylitol, ribitol, mannitol, sorbitol, galactitol, fucitol, iditol, volemitol and arbitrary combinations of two or more thereof. Still more preferably, the at least one sugar alcohol $a_2$) comprising 4 to 7 hydroxy groups is sorbitol, mannitol or xylitol and most preferably is sorbitol.

Particularly preferred combinations of a reaction of one or more compounds $a_1$) with one or more compounds $a_2$) are that in step a) succinic acid and/or succinic acid anhydride is reacted with sorbitol, mannitol and/or xylitol or that in step a) phthalic acid and/or phthalic anhydride is reacted with sorbitol, mannitol and/or xylitol.

In order to prevent a cyclisation of the at least one polyhydric alcohol comprising 4 to 7 hydroxy groups, which is preferably one or more sugar alcohols comprising 4 to 7 hydroxy groups, during step a), it is suggested in a further embodiment of the present invention that in step a) all of the at least one carboxylic acid comprising two or more carboxylic groups and/or of the at least one cyclic polycarboxylic acid anhydride $a_1$) are reacted with all of the at least one polyhydric alcohol comprising 4 to 7 hydroxy groups and preferably at least one sugar alcohol comprising 4 to 7 hydroxy groups $a_2$) in amounts so that the ratio of the number of all of the at least one carboxylic acid comprising two or more carboxylic groups and/or of the at least one cyclic polycarboxylic acid anhydride $a_1$) divided by the number of hydroxy groups of all of the at least one polyhydric alcohol comprising 4 to 7 hydroxy groups $a_2$) is 0.5 to 1. Even more preferably, the amounts of the compounds $a_1$) and $a_2$) are selected so that the aforementioned ratio is 0.6 to 1, more preferably 0.6 to 0.9, still more preferably 0.7 to 0.9 and most preferably about 0.8.

Preferably, the reaction is performed in step a) at a temperature of 90 to 180 °C for 2 to 20 hours preferably at ambient pressure. If one or more cyclic polycarboxylic anhydrides $a_1$) are used in step a), the reaction is performed in step a) preferably at a temperature of 90 to 130°C.

Furthermore, it is preferred that the reaction is performed in step a) with a solution, wherein the components $a_1$)

and $a_2$) are dissolved or dispersed in a solvent. Suitable examples for such a solvent are toluene, xylene, cyclohexane and methyl cyclohexane.

The reaction of step a) may be performed without any catalyst.

Alternatively, the reaction of step a) may be performed in the presence of one or more catalysts. Good results are in this embodiment obtained, when the catalyst is a Lewis acid or a Brønstedt base. Suitable examples for such a catalyst are compounds being selected from the group consisting of alkali metal hydroxides, zinc alkoxides, zinc halogenides, 1,8--diazabicyclo[5.4.0]undec-7-ene (DBU) and arbitrary combinations of two or more thereof. Most preferably the catalyst is selected from the group consisting of potassium hydroxide, zinc acetate, zinc chloride, 1,8-diazabicyclo[5.4.0]undec-7-ene (DBU) and arbitrary combinations of two or more thereof.

In accordance with the present invention, the polyesteracrylate composition is obtained with a method comprising a second step b) of reacting $b_1$) the first reaction mixture with $b_2$) at least one polyol comprising 2 to 5 hydroxy groups and (meth)acrylic acid or with $b_3$) at least one hydroxyfunctional (meth)acrylate so as to obtain a second reaction mixture comprising a polyesteracrylate. In accordance with a particular preferred embodiment of the present invention, the first reaction mixture $b_1$) is reacted in the second step b) with $b_2$) at least one polyol comprising 2 to 5 hydroxy groups and (meth) acrylic acid, i.e. the second step does not make any use of one or more hydroxyfunctional (meth)acrylates. More preferably, the at least one polyol is selected from the group consisting of glycerol, diglycerol, triglycerol, alkoxylated glycerols, pentaerythritol, $C_2$-$_{16}$-alkane diols, $C_{2-16}$-alkene diols, $C_{2-16}$-alkyne diols and arbitrary combinations of two or more thereof.

Still more preferably, the at least one polyol is selected from the group consisting of ethylene glycol, diethylene glycol, triethylene glycol, tetraethylene glycol, propylene glycole, dipropylene glycole, tripropylene glycole, glycerol, diglycerol, triglycerol, ethoxylated glycerol, propoxylated glycerol, pentaerythritol, 1,3-propane diol, 2-methyl-1,3-propanediol, 1,4-butane diol, 1,5-pentane diol, 1,6 hexane diol, decane diol and arbitrary combinations of two or more thereof. If propoxylated glycerol is used, the propoxylation degree is preferably 3 to 5. In particular with such low propoxylation degrees, good results are achieved.

Particular preferred examples for a combination of compounds $a_1$), $a_2$) and $b_2$) are the use of succinic acid as compound $a_1$), of sorbitol as compound $a_2$) and of propoxylated glycerol as compound $b_2$) or the use of succinic anhydride as compound $a_1$), of sorbitol as compound $a_2$) and of propoxylated glycerol as compound $b_2$) or the use of succinic acid as compound $a_1$), of xylitol as compound $a_2$) and of propoxylated glycerol as compound $b_2$) or the use of succinic anhydride as compound $a_1$), of xylitol as compound $a_2$) and of propoxylated glycerol as compound $b_2$) or the use of succinic acid as compound $a_1$), of mannitol as compound $a_2$) and of propoxylated glycerol as compound $b_2$) or the use of succinic anhydride as compound $a_1$), of mannitol as compound $a_2$) and of propoxylated glycerol as compound $b_2$).

In accordance with a further preferred embodiment of the present invention, the first reaction mixture $b_1$) is reacted in step b) with $b_2$) at least one polyol comprising 2 to 5 hydroxy groups and (meth)acrylic acid in amounts so that the ratio of the number of carboxylic groups of the first reaction product $b_1$) divided by the number of polyol molecules $b_2$) is 1:0.7 to 1:2 and more preferably 1:1 to 1:1.2. It is further preferred that the sum of the number of carboxylic groups of reaction mixture $b_1$) and the (meth)acrylic acid is 0.8 to 1.2 times the number of OH groups of the at least one polyol $b_2$) being added in step b). The number of carboxylic acid groups of the first reaction product can be calculated from the acid value, which is determined by means of titration.

Preferably, the reaction is performed in step b) at a temperature of 90 to 140°C for 10 to 20 hours.

Moreover, it is preferred that the reaction of step b) is performed in the presence of a catalyst. Suitable catalysts are para-toluene sulfonic acid, sodium hydroxide, potassium hydroxide, p-toluenesulfonic acid, methanesulfonic acid, sulfuric acid, hydrochloric acid, cuprous chloride, phosphoric acid, potassium carbonate, dibutyltin dilaurate, dibutyltin, stannous octoate, dibutyltin oxide, dioctyltin dilaurate, titanium tetrabutoxide, 1,8-diazabicyclo[5.4.0]undec-7-ene, tin octanoate and arbitrary combinations of two or more thereof.

In a further development of the idea of the present invention, it is suggested that the reaction is performed in step b) with monitoring the acid value in the reaction mixture, wherein the reaction is stopped, when the acid value is less than 50 mg KOH/g and preferably when the acid value is less than 20 mg KOH/g.

In addition, it is preferred that the water being formed during the reaction step b) is removed during step b) from the reaction mixture. More preferably, the water being formed during the reaction step b) is continuously removed during step b) from the reaction mixture, for instance by using a Dean-Stark apparatus to remove the water which is formed during the condensation reaction in an azeotropic distillation process.

It is preferred that in this embodiment, in which the polyesteracrylate composition is obtained with the aforementioned method comprising a second step b) of reacting $b_1$) the first reaction mixture with $b_2$) at least one polyol comprising 2 to 5 hydroxy groups and (meth)acrylic acid, the second reaction mixture obtained in step b) comprises 50 to 99% by weight of polyesteracrylate and 1 to 50% by weight of side products being the reaction products of the at least one polyol comprising 2 to 5 hydroxy groups $b_2$) and (meth)acrylic acid $b_2$). This embodiment has the advantage that the side products being the reaction product of the at least one polyol comprising 2 to 5 hydroxy groups $b_2$) and (meth)acrylic acid $b_2$) are liquid and have a low viscosity and hence act as a viscosity reducing agent. Additionally the presence of the side

products helps to avoid the gelation of the polyesteracrylate during the synthesis process as well as upon storage. Good results are in particular obtained, when the second reaction mixture obtained in step b) comprises 60 to 90% by weight and more preferably 70 to 80% by weight of the polyesteracrylate and 10 to 40% by weight and more preferably 20 to 30% by weight of side products being the reaction products of the at least one polyol comprising 2 to 5 hydroxy groups $b_2$) and (meth)acrylic acid $b_2$). Particular good results are obtained, when the second reaction mixture obtained in step b) comprises 75 to 80% by weight polyesteracrylate and 20 to 25% by weight of the side products.

In accordance with an alternative particularly preferred embodiment of the present invention, the first reaction mixture $b_1$) is reacted in the second step b) with $b_3$) at least one hydroxyfunctional (meth)acrylate, i.e. the second step does not make any use of one or more polyols comprising 2 to 5 hydroxy groups and (meth)acrylic acid. Good results are in particular obtained, when the at least one hydroxyfunctional (meth)acrylate is a hydroxyalkyl (meth)acrylate, which is preferably a $C_{1-20}$-hydroxyalkyl (meth)acrylate, more preferably a $C_{1--10}$--hydroxyalkyl (meth)acrylate and yet more preferably a $C_{2--6}$-hydroxyalkyl (meth)acrylate. Most preferably, the at least one hydroxyalkyl (meth)acrylate $b_3$) is a hydroxyalkyl (meth)acrylate being selected from the group consisting of 2-hydroxyethyl acrylate, 4-hydroxybutyl acrylate, 2-hydroxyethyl methacrylate and arbitrary combinations of two or more thereof.

Particular preferred examples for a combination of compounds $a_1$), $a_2$) and $b_3$) are the use of succinic acid as compound $a_1$), of sorbitol as compound $a_2$) and of 4-hydroxybutyl acrylate as compound $b_3$) or the use of succinic anhydride as compound $a_1$), of sorbitol as compound $a_2$) and of 4-hydroxybutyl acrylate as compound $b_3$) or the use of succinic acid as compound $a_1$), of xylitol as compound $a_2$) and of 4-hydroxybutyl acrylate as compound $b_3$) or the use of succinic anhydride as compound $a_1$), of xylitol as compound $a_2$) and of 4-hydroxybutyl acrylate as compound $b_3$) or the use of succinic acid as compound $a_1$), of mannitol as compound $a_2$) and of 4-hydroxybutyl acrylate as compound $b_3$) or the use of succinic anhydride as compound $a_1$), of mannitol as compound $a_2$) and of 4-hydroxybutyl acrylate as compound $b_3$).

In a further development of the idea of the present invention, it is proposed that the first reaction mixture $b_1$) is reacted in step b) with the at least one hydroxyfunctional (meth)acrylate $b_3$) in amounts so that the ratio of the number of carboxylic groups of the first reaction product b1) divided by the number of hydroxy groups of the hydroxyfunctional (meth) acrylate $b_3$) is 1:0.75 to 1:1.6 and more preferably 1:0.8 to 1:1.

As in the other preferred embodiment using in step b) at least one polyol comprising 2 to 5 hydroxy groups and (meth)acrylic acid $b_2$), it is also preferred in this embodiment of the present invention using at least one hydroxyfunctional (meth)acrylate $b_3$) that the reaction is performed in step b) at a temperature of 90 to 140°C for 10 to 20 hours preferably at ambient pressure.

As in the other preferred embodiment using in step b) at least one polyol comprising 2 to 5 hydroxy groups and (meth)acrylic acid $b_2$), the reaction of step b) may be performed in this embodiment of the present invention using at least one hydroxyfunctional (meth)acrylate $b_3$) in the presence of a catalyst. Suitable catalysts are para-toluene sulfonic acid, sodium hydroxide, potassium hydroxide, p-toluenesulfonic acid, methanesulfonic acid, sulfuric acid, hydrochloric acid, cuprous chloride, phosphoric acid, potassium carbonate, dibutyltin dilaurate, dibutyltin, stannous octoate, dibutyltin oxide, dioctyltin dilaurate titanium tetrabutoxide, 1,8-diazabicy-clo[5.4.0]undec-7-ene, tin octanoate and arbitrary combinations of two or more thereof.

Also, it is preferred in this embodiment of the present invention that the reaction is performed in step b) with monitoring the acid value in the reaction mixture, wherein the reaction is stopped, when the acid value is less than 80 mg KOH/g and preferably when the acid value is less than 20 mg KOH/g.

In addition, it is preferred also in this embodiment of the present invention that the water being formed during the reaction step b) is removed during step b) from the reaction mixture. More preferably, the water being formed during the reaction step b) is continuously removed during step b) from the reaction mixture, for instance by using a Dean-Stark apparatus to remove the water which is formed during the condensation reaction.

It is further preferred that in this embodiment, in which the polyesteracrylate composition is obtained with the aforementioned method comprising a second step b) of reacting $b_1$) the first reaction mixture with $b_3$) at least one hydroxyfunctional (meth)acrylate, that the second reaction mixture comprises at least 70% by weight, preferably at least 75% by weight, more preferably at least 80% by weight and most preferably 100% by weight of polyesteracrylate.

In order to remove unreacted reactants from the second reaction mixture, it is suggested in a further embodiment of the present invention that the second reaction mixture comprising the polyesteracrylate is subjected to a washing step using a washing agent. Preferably, the washing step is performed as liquid-liquid extraction using as washing agent an aqueous solution comprising up to 15% by weight of at least one salt. Suitable examples for the salt are sodium chloride, sodium hydrogen carbonate, sodium carbonate and ammonium chloride.

In accordance with an alternative embodiment of the present invention, instead of subjecting the second reaction mixture comprising the polyesteracrylate to a washing step using a washing agent or in addition to subjecting the second reaction mixture comprising the polyesteracrylate to a washing step, it is preferred that the polyesteracrylate composition is obtainable by the aforementioned method, which further comprises a reaction step c) of reacting the second reaction mixture with $c_1$) at least one epoxy compound optionally together with $c_2$) a catalyst at a temperature of 80 to 130°C for 1 to 50 hours and preferably 10 to 20 hours. Suitable examples for the at least one epoxy compound are resins or low molecular

weight compounds with epoxy functionalities, e.g. epoxidized soybean oil comprising preferably 4 to 6 epoxy groups, epoxidized castor oil, epoxidized linseed oil, vernolic acid, isosorbide bis-epoxides, bisphenol A diglycidylether, bisphenol F diglycidylether, 3,4-epoxycyclohexylmethyl-3',4'-epoxy-cyclohexane carboxylate, epoxy-phenol novolak, 1 ,4-butanediol diglycidylether, neopentylglycol diglycidylether, 2-ethylhexyl glycidylether, 1 ,6-hexandiol diglycidylether, polyoxypropylenglycol diglycidylether, trimethylolpropane polyglycidylether, poly(tetramethylene-oxid) diglycidylether, $C_{12-14}$-glycidylether, $C_{12-14}$-polyethyleneoxide-glycidylether, polyglycerol-3-polyglycidylether, glycerin polyglycidylether, pentaerythrol polyglycidylether, trimethylolpropane polyglycidylether, ethoxylated trimethylolpropane polyglycidylether, hydrated bisphenol A-diglycidylether, hydrated bisphenol F-diglycidylether, triglycidyl isocyanurate and arbitrary combinations of two or more thereof, whereas suitable examples for the at least one catalyst are triphenylphosphine, zircornium octoate, zircornium neodecanoate, zircornium acetate, zircornium neodecanoate, 2-ethyl imidazole and arbitrary combinations of two or more thereof.

In a further development of the idea of the present invention, it is suggested that the polyesteracrylate has a weight average molecular weight $M_w$ measured by gel permeation chromatography of 500 to 10,000 g/mol, preferably of 700 to 5,000 g/mol and more preferably of 1,000 to 3,000 g/mol.

Moreover, it is preferred that the polyesteracrylate has a number average molecular weight $M_w$ measured by gel permeation chromatography of 2,000 to 30,000 g/mol, preferably of 5,000 to 20,000 g/mol and more preferably of 5,000 to 10,000 g/mol.

In accordance with the present invention, the weight average molecular weight $M_w$ and number average molecular weight $M_n$ of the polyesteracrylate is calculated from the molecular weight distribution determined by means of gel permeation chromatography. Preferably, a linear polystyrene standard is used. Such standards may be obtained from PSS Polymer Standards Service GmbH, Mainz, Germany. For instance, an Agilent 1200 liquid chromatography device equipped with three SDV GPC columns from PSS Polymer Standards Service GmbH, Mainz, Germany with dimensions of 300 x 8 mm (with particle size porosities of 50 Å, 1,000 Å and 100,000 Å) and a refractive index detector. The mobile phase is tetrahydrofuran, and the flow rate is set to 1 ml/min. The gel permeation chromatography is calibrated with help of linear polystyrene standards from PSS Polymer Standards Service GmbH, Mainz, Germany, ranging from 266 to $2.5 \times 10^6$ g/mol. The samples are for instance prepared by dissolving 100 mg of the polymer sample in 10 ml tetrahydrofuran and then 100 $\mu$l of the sample solution in THF is injected into the GPC column. The column oven temperature is 30°C, the temperature of the RI-Detector (refractive index) is 35°C and the flow rate 1 ml/min.

In accordance with a further preferred embodiment of the present invention, the polyesteracrylate in accordance with the present invention has an acid number of 0 to 100 mg KOH/g, preferably of 0 to 50 mg KOH/g and more preferably of 0 to 20 mg KOH/g. Preferably, the acid number of the polymer is measured by titration. The quantity of KOH (given in mg) that is needed to neutralize 1 g of the substance is determined. For instance, the acid number of the polymer is measured as follows: An accurate quantity of about 2.0 g of the polymer to be measured is weighed with an accuracy of +/- 0.01 g into 25 ml of the prepared solvent mixture of 2 parts of toluene and 1 part of ethanol. The material is dissolved at room temperature or, if it does not dissolve at room temperature, at 60°C. Then, the mixture is cooled to room temperature and 2 to 3 drops of phenolphthalein indicator solution (1% dissolved in ethanol) are added and the mixture is titrated against 0.5 mol/L ethanolic KOH solution with a burette until a permanent light pink color is obtained for at least 30 seconds. The acid value is calculated according to the following formula:

Acid value = (56.1 g/mol x Volume (in L) ethanolic KOH solution added x concentration of KOH solution (in mol/L)) / mass of the material weighed in (in g).

In accordance with still a further preferred embodiment of the present invention, the polyesteracrylate in accordance with the present invention has a viscosity, of 2 to 150 Pa·s, preferably of 5 to 50 Pa·s and more preferably of 8 to 20 Pa·s. In accordance with the present invention the viscosity is determined by using a Physica MCR 100 Rheometer from Anton Paar GmbH, Graz, Austria with a cone-plate geometry. The cone has a diameter of 25 mm and an angle of 1°. The gap of the cone and the plate is 0.05 mm, the temperature is set to 20°C and the viscosity is determined at a deformation rate of 50 radian/s.

A further aspect of the present invention is a method for producing a polyesteracrylate composition in accordance with any of the preceding claims comprising the steps of:

a) reacting $a_1$) at least one carboxylic acid comprising two or more carboxylic groups and/or at least one cyclic polycarboxylic acid anhydride with $a_2$) at least one polyhydric alcohol comprising 4 to 7 hydroxy groups and preferably at least one sugar alcohol comprising 4 to 7 hydroxy groups so as to obtain a first reaction mixture comprising a first reaction product and

b) reacting $b_1$) the first reaction mixture with $b_2$) at least one polyol comprising 2 to 5 hydroxy groups and (meth)acrylic acid or with $b_3$) at least one hydroxyfunctional (meth)acrylate so as to obtain a second reaction mixture comprising a

polyesteracrylate.

The specifics mentioned above for the polyesteracrylate composition are also valid for the method.

According to still a further aspect, the present invention is related to a coating comprising:

- 10 to 70% by weight of the aforementioned polyesteracrylate composition,
- 0 to 60% by weight of reactive or inert co-resins,
- 1 to 40% by weight reactive diluents, preferably monofunctional, difunctional or polyfunctional monomeric acrylates and/or oligomeric acrylates of at most 800 g/mol and mixtures thereof,
- 0 to 30% by weight pigment and filler, preferably selected from the group consisting of inorganic pigments, organic pigments like e.g. azopigments, carbon black, titanium dioxide, aluminium oxides, silicates, carbonates and mixtures thereof,
- 0 to 10% by weight of one or more additives,
- 0 to 10% by weight of one or more photoinitiators and/or co-initiators and
- 0 to 30% by weight of one or more solvents preferably selected from the group of alcohols, ketones, esters or ethers.

Suitable reactive co-resins are epoxy acrylates, urethane acrylates, polyether acrylates, polyesteracrylates different from the aforementioned polyesteracrylate compositon, acrylic acrylates, amino acrylates and arbitrary mixtures of two or more thereof.

Suitable inert co-resins are resins without polymerizable groups upon radiation or thermal initiation, such as ketonic resins, modified cellulose, acrylic hydrocarbon hybrid resins , polyacrylic resins, allyl resins, vinyl resins, rosin esters, poly urea resins.

Suitable examples for the reactive diluents are GPTA, TMPTA, TPGDA, HDDA, ethoxylated TMPTA, epoxylated soybean oil acrylate, IBOA, Lauryl acrylate, THFA, decandiol diacrylate, DPGDA, TPGDA, THEICTA, PEGDA, Petia, PPTTA, DPHA and mixtures thereof.

The pigment is preferably selected from the group consisting of organic and inorganic pigments, more preferably from azopigments, polycyclic pigments, such as quinacridone pigments, metal complex pigments, such as phthalocyanines, carbon black, titanium dioxides and mixtures thereof.

Preferred examples for fillers are those being selected from the group consisting of silicates, silicon dioxide, talcum, aluminum oxide, aluminum hydroxide, calcium and/or barium carbonates and calcium and/or barium sulfates and mixtures thereof.

Suitable additives are those being selected from the group consisting of stabilizers, leveling agents, dispersing agents, wetting agents, adhesion promoters, flow additives, waxes, defoamers, antioxidants and mixtures thereof.

Suitable photoinitiators and co-initiators are compounds selected from the group of benzophenones, thioxanthones, xanthones and anthraquinones, ketocoumarins, carbazoles, $\alpha$-hydroxy ketones, $\alpha$-aminoketones, benzoin ethers, benzil ketals, $\alpha,\beta$ ketoesters, camphorquinones, dimethylketals, acylphosphine oxides, tertiary amines, and aromatic tertiary amines, such as dimethylamino benzoates and mixtures thereof.

According to still a further aspect, the present invention is related to a printing ink comprising:

- 10 to 60% by weight of the aforementioned polyesteracrylate composition,
- 1 to 40% by weight of reactive diluent, preferably monofuntional, difuntional or polyfunctional monomeric acrylates having a weight average molecular weight of at most 800 g/mol and/or oligomeric acrylates and mixtures thereof,
- 0 to 60% by weight of reactive or inert co-resins
- 0.1 to 40% by weight pigment, preferably selected from the group consisting of inorganic or organic pigments, carbon black, titanium dioxides and mixtures thereof,
- 0 to 20% by weight of one or more fillers, preferably selected from the group of silicates, aluminates, talcum and mixtures thereof,
- 0 to 10% by weight of one or more additives, preferably being selected from the group consisting of stabilizers, leveling agents, adhesion promoters, waxes and flow additives,
- 0.1 to 10% by weight of one or more photoinitiators and/or co-initiators and
- 0 to 30% of solvents.

Subsequently, the present invention is described by means of illustrating, but not limiting examples.

## Example 1

For the first reaction step a) 27.3 g sorbitol (Neosorb P60, Roquette freres) were added in a molar ratio of 1:4 with 60 g succinic anhydride (Sigma Aldrich) into a 1 liter 3-neck flask being equipped with a mechanical stirrer and with a reflux

condenser. Then, 75 ml of toluene were added and the resulting mixture was heated to 115°C. The progress of the reaction was monitored by IR spectroscopy monitoring observing the depletion of the 1780 $cm^{-1}$ and 1860 $cm^{-1}$ absorption bands. The reaction was completed after 4.5 h and the reaction mixture was cooled. The first reaction mixture was obtained as a light-coloured melt, which hardened very quickly to a white solid after it cooled down to room temperature.

Thereafter, the 3-neck flask was extended by a Dean-Stark water separator and the reaction step b) was performed by adding 69.7 g hydroxyethylacrylate (Sigma Aldrich), 1.1 g methanesulfonic acid (Sigma Aldrich) and 0.6 g 4-methoxyphenol (Sigma Aldrich) to the first reaction mixture. Additionally, air was purched into the reaction mass with a constant flow rate. The condensation reaction step b) was conducted until the amount of water collected in the separator did not increase further. Afterwards the air flow was stopped and the toluene was removed under reduced pressure at about 10 mPa at 110°C. The second reaction mixture or final product, respectively, had an acid value of 72 mg KOH/g.

**Example 2**

The reaction steps a) and b) were performed as described above for example 1 except that in reaction step b) an equimolar amount of hydroxybutyl acrylate was used instead of hydroxyethyl acrylate.

After the removal of the toluene under reduced pressure the acid value was determined to be 30 mg KOH/g.

**Example 3**

The reaction steps a) and b) were performed as described above for example 1 except that in reaction step a) an equimolar amount of phthalic anhydride was used instead of succinic anhydride and that reaction step a) was performed 120°C for 12 hours.

The reaction apparatus was the same described in example 1.

The condensation reaction step b) was conducted at 110°C for 18 hours. The reaction was stopped when no formation of water was observed anymore. After removing the toluene the acid value was determined to be 72 mg KOH/g.

**Example 4**

The reaction step a) was performed as described above for example 1. For the reaction step b) 233.9 g propoxylated glycereol (Voranol 260, Dow Chemicals), 129.8 g acrylic acid, 1.64 g 4-methoxypheno (Sigma Aldrich) and 3.17 g para-toluenesulfonic acid monohydrate (Sigma Aldrich) were added to the first reaction mixture having been obtained in reaction step a). The reaction apparatus was the same as used in example 1.

At about 120°C water started to condense in the Dean-Stark apparatus. The temperature was adjusted up to 125°C so as to obtain a thorough reflux and in turn removal of the water being formed in the course of the reaction. The reaction progress was monitored by determining the acid value. Once the acid value was below 20 mg KOH/g and did not change any further for 11 to 20 hours), the toluene was removed.

For the third reaction step c), to 402,36 g of the second reaction mixture having been obtained in reaction step b) 12.68 g of the epoxide resin (ARALDITEO DY-S, Huntsman), 1.25 g of triphenylphosphine (Sigma Aldrich) as catalyst and 0.42 g 4-meth-oxylphenol as inhibitor were added in a 1 liter 3-neck round bottom flask. Then, the air inlet tube was installed and the reaction mixture was slowly heated to 115°C, while stirring with a mechanical stirrer at 250 to 300 rpm and gentle air bubbling. The reaction progress was monitored by means of the acid value. After 7.5 h reaction time the acid value reached a value of 7 mg KOH/g and did not further decrease, the reaction was stopped and the sample discharged.

**Example 5**

For the first reaction step a) 27.3 g sorbitol (Neosorb P60, Roquette freres) were added in a molar ratio of 1:4 with 60 g succinic acid (Sigma Aldrich) into a 1 liter 3-neck flask being equipped with a mechanical stirrer and Dean-Stark water separator and a condenser. Then, 75 ml of toluene were added and the resulting mixture was heated to 120°C. At 120°C water coming from the esterification reaction could be removed from the reaction mass. The temperature was successively increased up to 180°C until no more water formation was observed. The reaction was completed after 21 h and cooled to room temperature.

For the reaction step b), 233.9 g propoxylated glycereol (Voranol 260, Dow Chemicals), 129.8 g acrylic acid, 1.64 g 4-methoxypheno (Sigma Aldrich) and 3.17 g para-toluenesulfonic acid monohydrate (Sigma Aldrich) were added to the first reaction mixture having been obtained in reaction step a). The reaction apparatus was the same as used in example 1.

At about 120°C water started to condense in the Dean-Stark apparatus. The temperature was adjusted up to 125°C so as to obtain a thorough reflux and in turn removal of the water being formed in the course of the reaction. The reaction progress was monitored by determining the acid value. Once the acid value was below 20 mg KOH/g and did not change any further for 11 to 20 hours), the toluene was removed.

**Example 6**

The reaction steps a) and b) were performed as described above for example 1 except that in reaction step a) an equimolar amount of xylitol (Xylisorb 300, Roquette freres) was used instead of sorbitol.

**Example 7**

The reaction steps a) and b) were performed as described above for example 1 except that in reaction step a) an equimolar amount of mannitol (Mannitol 60, Roquette freres) was used instead of sorbitol.

| | Viscosity [Pa·s] Physica D = 50 $s^{-1}$ | Acid value [mg KOH/g] Titration | OH value [mg KOH/g] | Molecular weight GPC Mw / Mn [g/mol] |
|---|---|---|---|---|
| Example 1 | 28 | 72 | 33 | 660 / 8800 |
| Example 2 | 13 | 29 | 32 | 800 / 6500 |
| Example 3 | 12 | 72 | 24 | 500 / 4500 |
| Example 4 | 13 | 7 | 66 | 1300 / 3600 |
| Example 5 | 20 | 11 | n.a. | 1400 / 3800 |
| Example 6 | 15 | 7 | 83 | 1000 / 3000 |
| Example 7 | 10 | 72 | 119 | |

**Example 8**

Film properties of the oligomers have been studied adding 2% photoinitiator (2% TPO-L & 1% Omnirad 1173) and a leveling agent (0.5% Efka SL 3259) to example 4, 5, 6 and 7. The film hardness was determined by means of the pendulum hardness employing the König method according to ISO 1522. Films were casted on a glass plate using a 100 µm doctor blade (from Erichsen GmbH & Co. KG, Hemer, Germany). Afterwards, the film was cured using a UV curing system from AMS "Superproofer" equipped with a medium pressure mercury lamp from Baldwin (Serial Nr. 7804853) and applying a power of 240 W/cm. The distance between the lamp and the substrate was 45 mm. The layer was cured with two passes at 100% lamp power and a belt speed of 10 m/min. Further the resistance against coffee and red wine was tested employing the DIN 68861 for the test parameters and qualitative evaluation of the resistances in marks from 1 to 5 (5 best and 1 being week). The test of the resistance was performed on films that have been coated with a 40 µm K-bar (from Erichsen GmbH & Co. KG, Hemer, Germany) on poly-coated Leneta cards. The films were cured using the UV curing system described above applying 1 pass at 10 m/min and 100% lamp power.

**Table 1.** Pendulum hardness and Resistances of films of Example 4 to 7 cured upon UV iradiation.

| | Example 4 | Example 5 | Example 6 | Example 7 |
|---|---|---|---|---|
| Pendulum Hardness (König) [seconds] | 60 | 33 | 40 | 26 |
| Resistance | | | | |
| Coffee 6h | 4 | 4 | 4 | 4 |
| Red wine 16h | 3 | 3 | 3 | 3 |

## Claims

1. A polyesteracrylate composition being obtainable by a method comprising the steps of:

a) reacting $a_1$) at least one carboxylic acid comprising two or more carboxylic groups and/or at least one cyclic polycarboxylic acid anhydride with $a_2$) at least one polyhydric alcohol comprising 4 to 7 hydroxy groups so as to obtain a first reaction mixture comprising a first reaction product and
b) reacting $b_1$) the first reaction mixture with $b_2$) at least one polyol comprising 2 to 5 hydroxy groups and (meth) acrylic acid or with $b_3$) at least one hydroxyfunctional (meth)acrylate so as to obtain a second reaction mixture

comprising a polyesteracrylate.

2. The polyesteracrylate composition in accordance with claim 1, wherein in step a) as polyhydric alcohol comprising 4 to 7 hydroxy groups $a_2$) at least one sugar alcohol comprising 4 to 7 hydroxy groups is used.

3. The polyesteracrylate composition in accordance with claim 1 or 2, wherein in step a) at least one carboxylic acid $a_1$) comprising two or more carboxylic groups is reacted with $a_2$) at least one polyhydric alcohol comprising 4 to 7 hydroxy groups and preferably at least one sugar alcohol comprising 4 to 7 hydroxy groups, wherein the at least one carboxylic acid $a_1$) comprises two to five carboxylic groups, preferably two to four carboxylic groups, more preferably two or three carboxylic groups and most preferably two carboxylic groups.

4. The polyesteracrylate composition in accordance with any of claims 1 to 3, wherein the at least one carboxylic acid $a_1$) is a dicarboxylic acid having the general formula (I):

$$HOOC\text{-}R^1\text{-}COOH \qquad (I),$$

wherein $R^1$ is absent, a substituted or unsubstituted alkyl group, a substituted or unsubstituted alkenyl group, a substituted or unsubstituted alkynyl group or an aromatic group, and wherein $R^1$ is preferably a $C_{1\text{-}12}$-alkyl group, a $C_{1\text{-}12}$-alkenyl group, a $C_{1\text{-}12}$-alkynyl group or a phenyl group, wherein preferably the at least one carboxylic acid $a_1$) is selected from the group consisting of oxalic acid, malonic acid, succinic acid, fumaric acid, maleic acid, itaconic acid, glutaric acid, adipic acid, phthalic acid, iso-phthalic acid, terephthalic acid, pimelic acid, suberic acid, azelaic acid, sebacic acid, decandioic acid, dodecandioic acid, dimer acid, citric acid and arbitrary combinations of two or more thereof, and wherein the at least one carboxylic acid $a_1$) is most preferably succinic acid and/or phthalic acid.

5. The polyesteracrylate composition in accordance with any of the preceding claims, wherein in step a) at least one cyclic polycarboxylic acid anhydride $a_1$) is reacted with $a_2$) at least one polyhydric alcohol comprising 4 to 7 hydroxy groups and preferably at least one sugar alcohol comprising 4 to 7 hydroxy groups, wherein the at least one cyclic polycarboxylic acid anhydride $a_1$) is a carboxylic acid anhydride having the general formula (II):

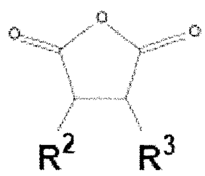

,

wherein $R^2$ and $R^3$ are independently from each other hydrogen, an aliphatic group or an aromatic group, preferably hydrogen, a $C_{1\text{-}6}$-aliphatic group or a $C_{6\text{-}8}$-aromatic group, wherein $R^2$ and $R^3$ may form together a five- or six-membered aromatic or cycloaliphatic ring each of which can be further substituted by e.g. hydroxy or carboxylic groups, carboxylic acid anhydride groups or combinations thereof, wherein preferably the at least one cyclic polycarboxylic acid anhydride $a_1$) is selected from the group consisting of succinic anhydride, maleic anhydride, itaconic anhydride, adipic anhydride, phthalic anhydride, pyromellitic anhydride, tetrahydrophthalic anhydride, glutaric anhydride, ethylenetetracarboxylic dianhydride and arbitrary combinations of two or more thereof and more preferably is succinic anhydride.

6. The polyesteracrylate composition in accordance with any of the preceding claims, wherein in step a) as polyhydric alcohol comprising 4 to 7 hydroxy groups $a_2$) at least one sugar alcohol comprising 4 to 7 hydroxy groups is used, wherein the at least one sugar alcohol $a_2$) comprising 4 to 7 hydroxy groups used in step a) has the general formula (III):

$$HO\text{-}CH_2\text{-}[CH(OH)]_n\text{-}CH_2\text{-}HO \qquad (III),$$

wherein n is an integer of 2 to 5, preferably of 3 or 4 and most preferably of 4, wherein preferably the at least one sugar alcohol $a_2$) is selected from the group consisting of erythritol, threitol, arabitol, xylitol, ribitol, mannitol, sorbitol, galactitol, fucitol, iditol, volemitol and arbitrary combinations of two or more thereof, wherein the at least one sugar alcohol $a_2$) is more preferably sorbitol, mannitol or xylitol and most preferably sorbitol.

7. The polyesteracrylate composition in accordance with any of the preceding claims, wherein in step a) all of the at least one carboxylic acid comprising two or more carboxylic groups and/or of the at least one cyclic polycarboxylic acid anhydride $a_1$) are reacted with all of the at least one polyhydric alcohol comprising 4 to 7 hydroxy groups $a_2$) in amounts so that the ratio of the number of all of the at least one carboxylic acid comprising two or more carboxylic groups and/or of the at least one cyclic polycarboxylic acid anhydride $a_1$) divided by the number of hydroxy groups of all of the at least one polyhydric alcohol comprising 4 to 7 hydroxy groups $a_2$) is 0.5 to 1, preferably 0.6 to 1, more preferably 0.6 to 0.9, still more preferably 0.7 to 0.9 and most preferably about 0.8.

8. The polyesteracrylate composition in accordance with any of the preceding claims, wherein in step b) the first reaction mixture $b_1$) is reacted with $b_2$) at least one polyol comprising 2 to 5 hydroxy groups and (meth)acrylic acid, wherein preferably the at least one polyol comprising 2 to 5 hydroxy groups is an organic polyhydroxy compound comprising two to five hydroxy groups and more preferably is selected from the group consisting of glycerol, diglycerol, triglycerol, alkoxylated glycerols, pentaerythritol, $C_{2-16}$-alkane diols, $C_{2-16}$-alkene diols, $C_{2-16}$-alkyne diols and arbitrary combinations of two or more thereof, wherein even more preferably the at least one polyol comprising 2 to 5 hydroxy groups is selected from the group consisting of ethylene glycol, diethylene glycol, triethylene glycol, tetraethylene glycol, propylene glycole, dipropylene glycole, tripropylene glycole, glycerol, diglycerol, triglycerol, ethoxylated glycerol, propoxylated glycerol, pentaerythritol, 1,3-propane diol, 2-methyl-1,3-propanediol, 1,4-butane diol, 1,5-pentane diol, 1,6 hexane diol, decane diol and arbitrary combinations of two or more thereof.

9. The polyesteracrylate composition in accordance with any of claim 8, wherein the first reaction mixture $b_1$) is reacted in step b) with $b_2$) at least one polyol comprising 2 to 5 hydroxy groups and (meth)acrylic in amounts so that the ratio of the number of carboxylic groups of the first reaction product $b_1$) divided by the number of polyol molecules $b_2$) is 1:0.7 to 1:2 and more preferably 1:1 to 1:1.2, wherein preferably the sum of the number of carboxylic groups of reaction mixture $b_1$) and the (meth)acrylic acid is 0.8 to 1.2 times the number of OH groups of the at least one polyol $b_2$) being added in step b).

10. The polyesteracrylate composition in accordance with claim 8 or 9, wherein the reaction is performed in step b) with monitoring the acid value in the reaction mixture, wherein the reaction is stopped, when the acid value is less than 50 mg KOH/g and preferably when the acid value is less than 20 mg KOH/g.

11. The polyesteracrylate composition in accordance with any of claims 8 to 10, wherein the second reaction mixture obtained in step b) comprises 50 to 99% by weight, preferably 60 to 90% by weight and more preferably 70 to 80% by weight of polyesteracrylate and 1 to 50% by weight, preferably 10 to 40% by weight and more preferably 20 to 30% by weight of side products being the reaction product of the at least one polyol comprising 2 to 5 hydroxy groups $b_2$) and (meth)acrylic acid $b_2$).

12. The polyesteracrylate composition in accordance with any of claims 1 to 7, wherein in step b) the first reaction mixture $b_1$) is reacted with $b_3$) at least one hydroxyfunctional (meth)acrylate and preferably with a hydroxyalkyl (meth)acrylate, wherein preferably the at least one hydroxyfunctional (meth)acrylate $b_3$) is a hydroxyalkyl (meth)acrylate and more preferably a $C_{1-20}$-hydroxyalkyl (meth)acrylate, preferably a $C_{1-10}$-hydroxyalkyl (meth)acrylate, more preferably a $C_{2-6}$-hydroxyalkyl (meth)acrylate and most preferably a hydroxyalkyl (meth)acrylate being selected from the group consisting of 2-hydroxyethyl acrylate, 4-hydroxybutyl acrylate, 2-hydroxyethyl methacrylate and arbitrary combinations of two or more thereof, wherein preferably the first reaction mixture $b_1$) is reacted in step b) with the at least one hydroxyfunctional (meth)acrylate $b_3$) in amounts so that the ratio of the number of carboxylic groups of the first reaction product $b_1$) divided by the number of hydroxy groups of the hydroxyfunctional (meth)acrylate $b_3$) is 1:0.75 to 1:1.6 and preferably 1:0.8 to 1:1.

13. The polyesteracrylate composition in accordance with claim 12, wherein the second reaction mixture comprises at least 70% by weight, preferably at least 75% by weight, more preferably at least 80% by weight and most preferably 100% by weight of polyesteracrylate.

14. A coating comprising:

- 10 to 70% by weight of a polyesteracrylate composition in accordance with any of the preceding claims,
- 0 to 60% of reactive or inert co-resins,
- 1 to 40% by weight reactive diluents, preferably monofuntional, difuntional or polyfunctional monomeric acrylates and/or oligomeric acrylates having a weight average molecular weight of at most 800 g/mol and mixtures thereof,

- 0 to 30% by weight pigment and filler, preferably selected from the group consisting of inorganic pigments, organic pigments like e.g. azopigments, carbon black, titanium dioxide, aluminium oxides, silicates, carbonates and mixtures thereof,
- 0 to 10% by weight of one or more additives,
- 0 to 10% by weight of one or more photoinitiators and/or co-initiators and
- 0 to 30% by weight of one or more solvents preferably selected from the group of alcohols, ketones, esters or ethers.

**15.** A printing ink comprising:

- 10 to 60% by weight of a polyesteracrylate composition in accordance with any of claims 1 to 13,
- 1 to 40% by weight of reactive diluent, preferably monofuntional, difuntional or polyfunctional monomeric acrylates having a weight average molecular weight of at most 800 g/mol and/or oligomeric acrylates and mixtures thereof,
- 0 to 60% by weight of reactive or inert co-resins
- 0.1 to 40% by weight pigment, preferably selected from the group consisting of inorganic or organic pigments, carbon black, titanium dioxides and mixtures thereof,
- 0 to 20% by weight of one or more fillers, preferably selected from the group of silicates, aluminates, talcum and mixtures thereof,
- 0 to 10% by weight of one or more additives, preferably being selected from the group consisting of stabilizers, leveling agents, adhesion promoters, waxes and flow additives,
- 0.1 to 10% by weight of one or more photoinitiators and/or co-initiators and
- 0 to 30% of solvents.

Europäisches Patentamt
European Patent Office
Office européen des brevets

# EUROPEAN SEARCH REPORT

Application Number
EP 24 20 7187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 400 111 B2 (PEETERS STEPHAN [BE]; DE MICHELI PHILIPPE [BE] ET AL.) 3 September 2019 (2019-09-03) * claim 15; examples R1, 1, 4, 7, 13, 14, F1-F6; tables 1, 3, 4, 6, 7 * ----- | 1-15 | INV. C08G63/47 C08G63/78 C08G63/20 C09D4/06 |
| A | US 2004/171780 A1 (ARCENEAUX JO ANN [US] ET AL) 2 September 2004 (2004-09-02) * examples 1, 2 * ----- | 1-15 | |
| A | US 2012/245246 A1 (YIN SCOTT [US] ET AL) 27 September 2012 (2012-09-27) * paragraph [0114] - paragraph [0116]; examples 4, 34; table 3 * ----- | 1-15 | |
| A | EP 3 212 718 B1 (ARKEMA FRANCE [FR]) 28 November 2018 (2018-11-28) * claims 21-28; examples 1, 2; tables 1, 2 * ----- | 1-15 | |
| | | | TECHNICAL FIELDS SEARCHED (IPC) |
| | | | C08G C09D |

The present search report has been drawn up for all claims

1

| Place of search | Date of completion of the search | Examiner |
|---|---|---|
| The Hague | 7 April 2025 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 20 7187

This annex lists the patent family members relating to the patent documents cited in the above-mentioned European search report. The members are as contained in the European Patent Office EDP file on
The European Patent Office is in no way liable for these particulars which are merely given for the purpose of information.

07-04-2025

| Patent document cited in search report | Publication date | Patent family member(s) | Publication date |
|---|---|---|---|
| US 10400111 B2 | 03-09-2019 | CN 102712820 A | 03-10-2012 |
| | | EP 2365036 A1 | 14-09-2011 |
| | | EP 2545124 A1 | 16-01-2013 |
| | | JP 5851428 B2 | 03-02-2016 |
| | | JP 2013522380 A | 13-06-2013 |
| | | KR 20130018679 A | 25-02-2013 |
| | | TW 201139571 A | 16-11-2011 |
| | | US 2012328795 A1 | 27-12-2012 |
| | | WO 2011110495 A1 | 15-09-2011 |
| US 2004171780 A1 | 02-09-2004 | CA 2447628 A1 | 05-12-2002 |
| | | CN 1520434 A | 11-08-2004 |
| | | EP 1421134 A1 | 26-05-2004 |
| | | JP 2005501133 A | 13-01-2005 |
| | | KR 20040011510 A | 05-02-2004 |
| | | MX PA03010671 A | 01-07-2004 |
| | | TW I229687 B | 21-03-2005 |
| | | US 2002188154 A1 | 12-12-2002 |
| | | US 2004014931 A1 | 22-01-2004 |
| | | US 2004171780 A1 | 02-09-2004 |
| | | WO 02096971 A1 | 05-12-2002 |
| US 2012245246 A1 | 27-09-2012 | CA 2779903 A1 | 03-06-2011 |
| | | EP 2504376 A1 | 03-10-2012 |
| | | MX 349929 B | 21-08-2017 |
| | | US 2012245246 A1 | 27-09-2012 |
| | | WO 2011066313 A1 | 03-06-2011 |
| EP 3212718 B1 | 28-11-2018 | CN 107148437 A | 08-09-2017 |
| | | EP 3212718 A1 | 06-09-2017 |
| | | ES 2712426 T3 | 13-05-2019 |
| | | FR 3027899 A1 | 06-05-2016 |
| | | TW 201634522 A | 01-10-2016 |
| | | US 2017355660 A1 | 14-12-2017 |
| | | WO 2016066918 A1 | 06-05-2016 |



For more details about this annex : see Official Journal of the European Patent Office, No. 12/82